# EUROPEAN PATENT APPLICATION

(11) **EP 4 434 835 A2**
(43) Date of publication of application: **25.09.2024**
(21) Application number: 22879609.0
(22) Date of filing: 26.10.2022
(51) Int. Cl.: B60W 10/04, B60W 30/045, B60W 30/18

(54) **CONTROL DEVICE AND CONTROL METHOD**

(30) Priority: 17.11.2021 JP 2021187317
(71) Applicant: Robert Bosch GmbH, 70442 Stuttgart (DE)
(72) Inventor: KANEKO, Shoichiro, Yokohama-shi, Kanagawa 224-8501 (JP); OIKAWA, Yuya, Yokohama-shi, Kanagawa 224-8501 (JP)
(74) Representative: Isarpatent
(86) International application number: PCT/IB2022/060273
(87) International publication number: WO 2023/089418

(57) **Abstract**

The present invention obtains a controller and a control method capable of appropriately adjusting drive power of a lean vehicle.

In a controller 20 and the control method according to the present invention, an execution section of the controller 20 executes drive power adjustment operation for adjusting drive power generated to a lean vehicle 1 according to wheel behavior or body behavior of the lean vehicle 1, and the execution section executes the drive power adjustment operation on the basis of turning posture information of the lean vehicle 1 and a height direction acceleration index value as an index value of height direction acceleration generated to the lean vehicle 1.

## Description

### Technical Field

The present disclosure relates to a controller and a control method capable of appropriately adjusting drive power of a lean vehicle.

### Background Art

As a conventional technique related to a lean vehicle such as a motorcycle, a technique of assisting with driving by a rider has been available. For example, a driver assistance system is disclosed in PTL 1. The driver assistance system warns the rider of the motorcycle that the motorcycle inappropriately approaches an obstacle on the basis of information detected by a sensor that detects the obstacle present in a travel direction or substantially in the travel direction.

### Citation List

### Patent Literature

PTL 1: JP-A-2009-116882

### Summary of Invention

### Technical Problem

By the way, as a technique of assisting with driving, a technique of executing drive power adjustment operation has been available. In the drive power adjustment operation, drive power generated to the vehicle is adjusted according to wheel behavior or body behavior of the vehicle. For example, the drive power adjustment operation can be applied to the lean vehicle. Here, since the lean vehicle is lighter than an automobile having four wheels, a tire load of the lean vehicle is likely to vary. As a result, such a situation where the drive power adjustment operation is not executed as intended by the rider possibly occurs. For example, there is a case where, when the lean vehicle travels straight, the drive power adjustment operation is executed at timing unintended by the rider due to a change in the tire load caused by an undulating road surface. Thus, it is desired to further appropriately adjust the drive power of the lean vehicle by the drive power adjustment operation.

The present invention has been made with the above-described problem as the background and therefore obtains a controller and a control method capable of appropriately adjusting drive power of a lean vehicle.

### Solution to Problem

A controller according to the present invention is a controller that controls behavior of a lean vehicle, and includes an execution section that executes drive power adjustment operation for adjusting drive power generated to the lean vehicle according to wheel behavior or body behavior of the lean vehicle. The execution section executes the drive power adjustment operation on the basis of turning posture information of the lean vehicle and a height direction acceleration index value as an index value of height direction acceleration generated to the lean vehicle.

A control method according to the present invention is a control method for behavior of a lean vehicle. In the control method, an execution section of a controller executes drive power adjustment operation that adjusts drive power generated to the lean vehicle according to wheel behavior or body behavior of the lean vehicle, and the execution section executes the drive power adjustment operation on the basis of turning posture information of the lean vehicle and a height direction acceleration index value as an index value of height direction acceleration generated to the lean vehicle.

### Advantageous Effects of Invention

In the controller and the control method according to the present invention, the execution section of the controller executes the drive power adjustment operation that adjusts the drive power generated to the lean vehicle according to the wheel behavior or the body behavior of the lean vehicle, and the execution section executes the drive power adjustment operation on the basis of the turning posture information of the lean vehicle and the height direction acceleration index value as the index value of the height direction acceleration generated to the lean vehicle. In this way, it is possible to adjust the drive power based on a tire load according to a turning situation of the lean vehicle. As a result, it is possible to appropriately adjust the drive power of the lean vehicle. Therefore, such a situation where the drive power adjustment operation is not executed as intended by the rider is suppressed.

### Brief Description of Drawings

Fig. 1 is a schematic view illustrating an outline configuration of a lean vehicle according to an embodiment of the present invention.
Fig. 2 is a block diagram illustrating an exemplary functional configuration of a controller according to the embodiment of the present invention.
Fig. 3 is a flowchart illustrating a flow of a first processing example that is executed by the controller according to the embodiment of the present invention.
Fig. 4 is a flowchart illustrating a flow of a second processing example that is executed by the controller according to the embodiment of the present invention. Description of Embodiments

A description will hereinafter be made on a controller according to the present invention with reference to the drawings.

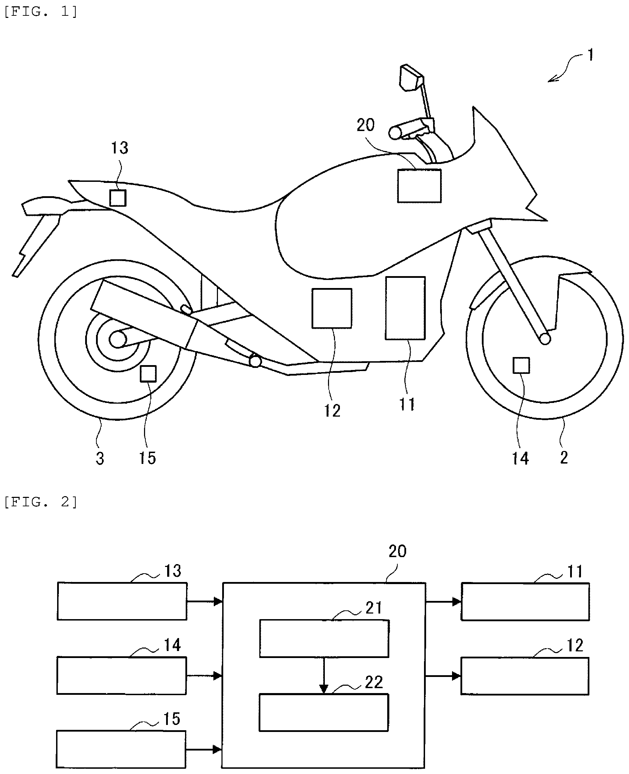

The following description will be made on the controller that is used for a two-wheeled motorcycle (see a lean vehicle 1 in Fig. 1). However, a vehicle as a control target of the controller according to the present invention only needs to be a lean vehicle, and may be a lean vehicle other than the two-wheeled motorcycle. The lean vehicle means a vehicle, a body of which is tilted to the right when turning in a right direction and is tilted to the left when turning in a left direction. Examples of the lean vehicle are motorcycles (the two-wheeled motor vehicle and a three-wheeled motor vehicle) and pedal-driven vehicles. The motorcycles include a vehicle having an engine as a drive source, a vehicle having an electric motor as a drive source, and the like. Examples of the motorcycles are a motorbike, a scooter, and an electric scooter. The pedal-driven vehicle means a vehicle capable of traveling forward on a road by a depression force applied to pedals by the rider. Examples of the pedal-driven vehicle are an electrically-assisted pedal-driven vehicle and an electric pedal-driven vehicle.

In addition, the following description will be made on a case where the engine (more specifically, an engine 11 in Fig. 1, which will be described below) is mounted as a drive source capable of outputting power for driving a wheel. However, as the drive source, a drive source other than the engine (for example, the electric motor) may be mounted, or plural types of the drive sources may be mounted.

A configuration, operation, and the like, which will be described below, merely constitute one example. The controller and the control method according to the present invention are not limited to a case with such a configuration, such operation, and the like.

The same or similar description will appropriately be simplified or will not be made below. In the drawings, the same or similar members or portions will not be denoted by a reference sign or will be denoted by the same reference sign. A detailed structure will appropriately be illustrated in a simplified manner or will not be illustrated.

### <Configuration of Lean Vehicle>

A description will be made on a configuration of the lean vehicle 1 according to an embodiment of the present invention with reference to Fig. 1 and Fig. 2.

Fig. 1 is a schematic view illustrating an outline configuration of the lean vehicle 1. Fig. 2 is a block diagram illustrating an exemplary functional configuration of a controller 20.

The lean vehicle 1 is a two-wheeled motorcycle that corresponds to an example of the lean vehicle according to the present invention. As illustrated in Fig. 1, the lean vehicle 1 includes a front wheel 2, a rear wheel 3, the engine 11, a hydraulic pressure control unit 12, an inertial measurement unit (IMU) 13, a front-wheel rotational frequency sensor 14, a rear-wheel rotational frequency sensor 15, and a controller (ECU) 20.

The engine 11 corresponds to an example of a drive source of the lean vehicle 1 and can output power for driving a wheel. For example, the engine 11 is provided with: one or plural cylinders, each of which is formed with a combustion chamber therein; a fuel injector that injects fuel into the combustion chamber; and an ignition plug. When the fuel is injected from the fuel injector, air-fuel mixture containing air and the fuel is produced in the combustion chamber, and the air-fuel mixture is then ignited by the ignition plug and burned. Consequently, a piston provided in the cylinder reciprocates to cause a crankshaft to rotate. In addition, a throttle valve is provided to an intake pipe of the engine 11, and an intake air amount to the combustion chamber varies according to a throttle opening amount as an opening amount of the throttle valve.

The hydraulic pressure control unit 12 is a unit that has a function of controlling a braking force generated on the wheel. For example, the hydraulic pressure control unit 12 includes components (for example, a control valve and a pump) that are provided to an oil channel connecting a master cylinder and a wheel cylinder and control a brake hydraulic pressure in the wheel cylinder. By controlling operation of the components of the hydraulic pressure control unit 12, the braking force generated on the wheel is controlled. Here, the hydraulic pressure control unit 12 may control the braking force generated on each of the front wheel 2 and the rear wheel 3 or may only control the braking force generated on one of the front wheel 2 and the rear wheel 3.

The inertial measurement unit 13 includes a three-axis gyroscope sensor and a three-directional acceleration sensor, and detects a posture of the lean vehicle 1. The inertial measurement unit 13 is provided to a trunk of the lean vehicle 1, for example. The inertial measurement unit 13 may only include parts of the three-axis gyroscope sensor and the three-directional acceleration sensor.

For example, the inertial measurement unit 13 detects a lean angle of the lean vehicle 1 and outputs a detection result. The inertial measurement unit 13 may detect another physical quantity that can substantially be converted to the lean angle of the lean vehicle 1. The lean angle corresponds to an angle representing a tilt in a rolling direction of a body (more specifically, the trunk) of the lean vehicle 1 with respect to an upper vertical direction. The lean angle corresponds to an example of turning posture information of the lean vehicle 1. The turning posture information is information on a physical quantity to which the posture of the lean vehicle 1, which is changed by turning of the lean vehicle 1, is reflected. The turning posture information may include lateral acceleration of the lean vehicle 1 or may include a yaw rate of the lean vehicle 1. The lateral acceleration of the lean vehicle 1 includes the lateral acceleration in a vehicle coordinate system or another physical quantity that can substantially be converted to the lateral acceleration.

For example, the inertial measurement unit 13 detects height direction acceleration generated to the lean vehicle 1 and outputs a detection result. The inertial measurement unit 13 may detect another physical quantity that can substantially be converted to the height direction acceleration generated to the lean vehicle 1. The height direction acceleration has a positive value in the case of upward acceleration, and has a negative value in the case of downward acceleration. In the case of the upward acceleration, the height direction acceleration is increased as an absolute value thereof is increased. In the case of the downward acceleration, the height direction acceleration is reduced as the absolute value thereof is increased. The height direction acceleration corresponds to an example of a height direction acceleration index value that is an index value of the height direction acceleration generated to the lean vehicle 1. The height direction acceleration may be acceleration in a parallel direction to a vertical axis, which is an axis in a height direction of the body of the lean vehicle 1, or may be acceleration in a parallel direction to a gravitational force direction. The height direction acceleration index value may be a value of each of those types of the acceleration, or may be another physical quantity that can substantially be converted to each of those types of the acceleration.

The front-wheel rotational frequency sensor 14 is a wheel rotational frequency sensor that detects a rotational frequency of the front wheel 2 (for example, a rotational frequency of the front wheel 2 per unit time [rpm], a travel distance of the front wheel 2 per unit time [km/h], or the like), and outputs a detection result. The front-wheel rotational frequency sensor 14 may detect another physical quantity that can substantially be converted to the rotational frequency of the front wheel 2. The front-wheel rotational frequency sensor 14 is provided to the front wheel 2.

The rear-wheel rotational frequency sensor 15 is a wheel rotational frequency sensor that detects a rotational frequency of the rear wheel 3 (for example, the rotational frequency of the rear wheel 3 per unit time [rpm], a travel distance of the rear wheel 3 per unit time [km/h], or the like), and outputs a detection result. The rear-wheel rotational frequency sensor 15 may detect another physical quantity that can substantially be converted to the rotational frequency of the rear wheel 3. The rear-wheel rotational frequency sensor 15 is provided to the rear wheel 3.

The controller 20 controls behavior of the lean vehicle 1. For example, the controller 20 is partially or entirely constructed of a microcomputer, a microprocessor unit, or the like. Alternatively, the controller 20 may partially or entirely be constructed of one whose firmware and the like can be updated, or may partially or entirely be a program module or the like that is executed by a command from a CPU or the like, for example. The controller 20 may be provided as one unit or may be divided into plural units, for example.

As illustrated in Fig. 2, the controller 20 includes an acquisition section 21 and an execution section 22, for example. In addition, the controller 20 communicates with each of the devices in the lean vehicle 1.

The acquisition section 21 acquires information from each of the devices in the lean vehicle 1, and outputs the acquired information to the execution section 22. For example, the acquisition section 21 acquires information from the inertial measurement unit 13, the front-wheel rotational frequency sensor 14, and the rear-wheel rotational frequency sensor 15. In the present specification, the acquisition of the information can include extraction, generation, and the like of the information.

The execution section 22 executes various types of control by controlling operation of each of the devices in the lean vehicle 1. For example, the execution section 22 controls the operation of the engine 11 and the hydraulic pressure control unit 12.

Here, the execution section 22 executes drive power adjustment operation for adjusting drive power generated to the lean vehicle 1 according to wheel behavior or body behavior of the lean vehicle 1. In this embodiment, the execution section 22 executes the drive power adjustment operation on the basis of the turning posture information of the lean vehicle 1 and the height direction acceleration index value as the index value of the height direction acceleration generated to the lean vehicle 1. In this way, as will be described below, the drive power of the lean vehicle 1 is appropriately adjusted.

### <Operation of Controller>

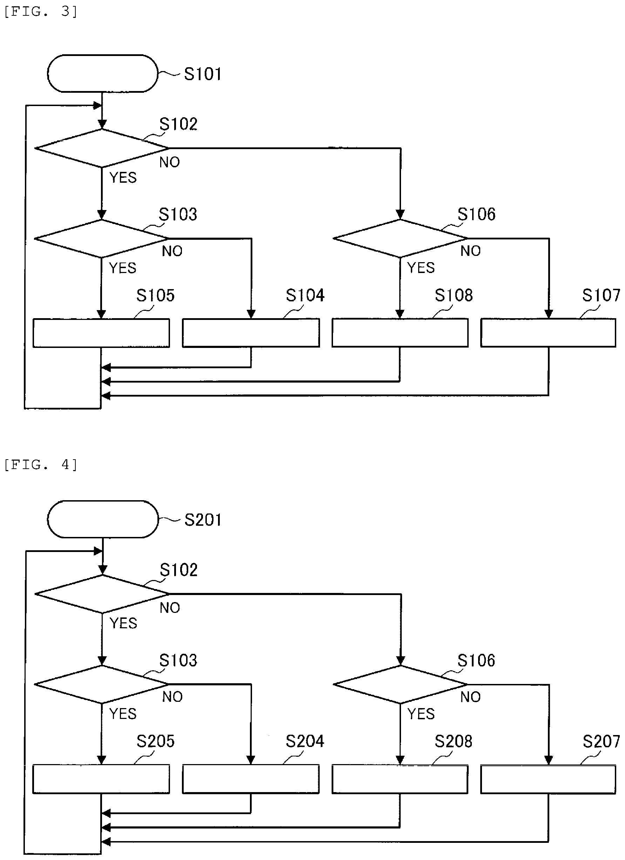

A description will be made on operation of the controller 20 according to the embodiment of the present invention with reference to Fig. 3 and Fig. 4.

As described above, the execution section 22 of the controller 20 executes the drive power adjustment operation. A description will hereinafter be made on an example in which, as the drive power adjustment operation, operation for reducing the drive power generated to the lean vehicle 1 is executed in order to optimize the wheel behavior. However, as will be described below, the drive power adjustment operation is not limited to this example.

In the following example, in the drive power adjustment operation, the execution section 22 makes adjustment for reducing the drive power generated to the lean vehicle 1 so as to suppress a slip of the rear wheel 3 as a drive wheel. For example, the execution section 22 reduces the drive power generated to the lean vehicle 1 in the case where a slip rate of the rear wheel 3 exceeds a target slip rate. In this way, the slip rate of the rear wheel 3 becomes lower than the target slip rate, and the slip of the rear wheel 3 is suppressed. The slip rate is an index that indicates a degree of slippage of the wheel on a road surface, and is a value that is acquired by dividing a difference between a vehicle speed and a wheel rotational frequency by the vehicle speed, for example. For example, the vehicle speed of the lean vehicle 1 can be acquired on the basis of the detection results of the front-wheel rotational frequency sensor 14 and the rear-wheel rotational frequency sensor 15.

A description will hereinafter be made on a first processing example in Fig. 3 and a second processing example in Fig. 4 in this order as processing examples related to the drive power adjustment operation executed by the controller 20.

Fig. 3 is a flowchart illustrating a flow of the first processing example that is executed by the controller 20. Step S101 in Fig. 3 corresponds to initiation of a control flow illustrated in Fig. 3. For example, the drive power adjustment operation is always executed during travel of the lean vehicle 1, and the control flow illustrated in Fig. 3 is executed during the travel of the lean vehicle 1.

For example, the control flow illustrated in Fig. 3 and the control flow illustrated in Fig. 4, which will be described below, may be executed in parallel. However, only one of the control flow illustrated in Fig. 3 and the control flow illustrated in Fig. 4, which will be described below, may be executed.

When the control flow illustrated in Fig. 3 is initiated, in step S102, the execution section 22 determines whether the lean vehicle 1 travels straight. If it is determined that the lean vehicle 1 travels straight (step S102/YES), the processing proceeds to step S103. On the other hand, if it is determined that the lean vehicle 1 turns (step S102/NO), the processing proceeds to step S106.

In step S102, the execution section 22 determines whether the lean vehicle 1 travels straight on the basis of the turning posture information of the lean vehicle 1. If the turning posture information is information indicating that the lean vehicle 1 travels straight, the execution section 22 determines that the lean vehicle 1 travels straight. On the other hand, if the turning posture information is information indicating that the lean vehicle 1 turns, the execution section 22 determines that the lean vehicle 1 turns.

In the case where the lean angle of the lean vehicle 1 is used as the turning posture information, for example, in the case where the lean angle is smaller than a reference lean angle, the execution section 22 determines that the lean vehicle 1 travels straight. On the other hand, in the case where the lean angle is larger than the reference lean angle, the execution section 22 determines that the lean vehicle 1 turns. The reference lean angle is set to, for example, an angle that is small enough to be able to determine whether the lean vehicle 1 travels straight. In the case where the lean angle matches the reference lean angle, the execution section 22 may determine that the lean vehicle 1 travels straight, or may determine that the lean vehicle 1 turns. However, in step S102, information other than the lean angle, such as the lateral acceleration of the lean vehicle 1 or the yaw rate of the lean vehicle 1, may be used as the turning posture information.

If the lean vehicle 1 travels straight and it is determined YES in step S102, in step S103, the execution section 22 determines whether the height direction acceleration generated to the lean vehicle 1 is higher than reference acceleration.

For example, the reference acceleration in step S103 is set to a value that is small enough to be able to determine that a tire load of the rear wheel 3 as the drive wheel has become excessively small due to loss thereof (for example, a value near a half of gravitational acceleration, or a value near 0) . In the case where the height direction acceleration is higher than the reference acceleration, the execution section 22 can determine that the tire load of the rear wheel 3 has become excessively small due to the loss thereof.

If it is determined that the height direction acceleration is lower than the reference acceleration (step S103/NO), the processing proceeds to step S104, and, in step S104, the execution section 22 sets a control mode of an adjustment amount of the drive power in the drive power adjustment operation to a normal mode. On the other hand, if it is determined that the height direction acceleration is higher than the reference acceleration (step S103/YES), the processing proceeds to step S105, and, in step S105, the execution section 22 sets the control mode of the adjustment amount of the drive power in the drive power adjustment operation to an adjustment amount reduction mode. In the case where the height direction acceleration matches the reference acceleration, the processing may proceed to step S104 or may proceed to step S105. After step S104 or step S105, the processing returns to step S102.

In the case where the control mode of the adjustment amount is the adjustment amount reduction mode, the execution section 22 reduces the adjustment amount of the drive power in the drive power adjustment operation in comparison with the case where the control mode of the adjustment amount is the normal mode. For example, in the drive power adjustment operation, the execution section 22 determines a reduction amount of the drive power on the basis of the slip rate of the rear wheel 3 and the target slip rate, and reduces the drive power generated to the lean vehicle 1 by the determined reduction amount. Here, in the case where the slip rate of the rear wheel 3 and the target slip rate are constant and the control mode of the adjustment amount is the adjustment amount reduction mode, the execution section 22 reduces the reduction amount of the drive power in the drive power adjustment operation in comparison with the case where the control mode of the adjustment amount is the normal mode. In this way, the drive power generated to the lean vehicle 1 in the drive power adjustment operation is increased.

As described above, in the case where, in a state where the turning posture information is the information indicating that the lean vehicle 1 travels straight, the height direction acceleration index value is a value indicating that the high height direction acceleration is generated to the lean vehicle 1 (that is a value indicating that the high height direction acceleration is generated to the lean vehicle 1 so that the tire load is reduced), the execution section 22 increases the drive power generated to the lean vehicle 1 in the drive power adjustment operation in comparison with the case where the height direction acceleration index value is a value indicating that the low height direction acceleration is generated to the lean vehicle 1 (that is a value indicating that the low height direction acceleration is generated to the lean vehicle 1 so that the tire load is increased). In this way, it is possible to suppress the drive power generated to the lean vehicle 1 from being reduced when the tire load of the rear wheel 3 as the drive wheel returns to normal after the tire load of the rear wheel 3 as the drive wheel is reduced due to the loss thereof during the straight travel of the lean vehicle 1. Here, during the straight travel of the lean vehicle 1, the execution section 22 may change the drive power generated to the lean vehicle 1 in the drive power adjustment operation in a stepwise manner or in a continuous manner according to the height direction acceleration generated to the lean vehicle 1.

Here, in the case where the lean vehicle 1 travels straight on a heavily undulating road surface, the rider desires to maintain an acceleration property of the lean vehicle 1 at a certain level. As described above, in the case where the tire load of the rear wheel 3 returns to normal after the tire load of the rear wheel 3 is reduced due to the loss thereof during the straight travel of the lean vehicle 1, such a situation where the acceleration of the lean vehicle 1 is hindered due to the insufficient drive power generated to the lean vehicle 1 is suppressed by suppressing the drive power generated to the lean vehicle 1 from being reduced. In this way, a situation where the drive power adjustment operation is not executed as intended by the rider is suppressed.

If the lean vehicle 1 turns and it is determined NO in step S102, in step S106, similar to step S103, the execution section 22 determines whether the height direction acceleration generated to the lean vehicle 1 is higher than reference acceleration.

The reference acceleration in step S106 is the same as the reference acceleration in step S103. That is, also in step S106, similar to step S103, in the case where the height direction acceleration is higher than the reference acceleration, the execution section 22 can determine that the tire load of the rear wheel 3 has become excessively small due to the loss thereof.

If it is determined that the height direction acceleration is lower than the reference acceleration (step S106/NO), the processing proceeds to step S107, and, in step S107, the execution section 22 sets the control mode of the adjustment amount of the drive power in the drive power adjustment operation to the normal mode. On the other hand, if it is determined that the height direction acceleration is higher than the reference acceleration (step S106/YES), the processing proceeds to step S108, and, in step S108, the execution section 22 sets the control mode of the adjustment amount of the drive power in the drive power adjustment operation to an adjustment amount increase mode. In the case where the height direction acceleration matches the reference acceleration, the processing may proceed to step S107 or may proceed to step S108. After step S107 or step S108, the processing returns to step S102.

In the case where the control mode of the adjustment amount is the adjustment amount increase mode, the execution section 22 increases the adjustment amount of the drive power in the drive power adjustment operation in comparison with the case where the control mode of the adjustment amount is the normal mode. For example, in the case where the slip rate of the rear wheel 3 and the target slip rate are constant and the control mode of the adjustment amount is the adjustment amount increase mode, the execution section 22 increases the reduction amount of the drive power in the drive power adjustment operation in comparison with the case where the control mode of the adjustment amount is the normal mode. In this way, the drive power generated to the lean vehicle 1 in the drive power adjustment operation is reduced.

As described above, in the case where, in a state where the turning posture information is the information indicating that the lean vehicle 1 turns, the height direction acceleration index value is the value indicating that the high height direction acceleration is generated to the lean vehicle 1, the execution section 22 reduces the drive power generated to the lean vehicle 1 in the drive power adjustment operation in comparison with the case where the height direction acceleration index value is the value indicating that the low height direction acceleration is generated to the lean vehicle 1. In this way, the drive power generated to the lean vehicle 1 is effectively reduced when the tire load of the rear wheel 3 as the drive wheel is reduced due to the loss thereof during the turn of the lean vehicle 1. Here, during the turn of the lean vehicle 1, the execution section 22 may change the drive power generated to the lean vehicle 1 in the drive power adjustment operation in the stepwise manner or in the continuous manner according to the height direction acceleration generated to the lean vehicle 1.

Here, in the case where the lean vehicle 1 turns on the heavily undulating road surface, the rider desires to optimize the wheel behavior or the body behavior of the lean vehicle 1. As described above, in the case where the tire load of the rear wheel 3 is reduced due to the loss thereof during the turn of the lean vehicle 1, such a situation where the suppression of the slip of the rear wheel 3 is insufficient is suppressed by effectively reducing the drive power generated to the lean vehicle 1. In this way, the situation where the drive power adjustment operation is not executed as intended by the rider is suppressed.

Fig. 4 is a flowchart illustrating a flow of the second processing example that is executed by the controller 20. Step S201 in Fig. 4 corresponds to initiation of a control flow illustrated in Fig. 4. For example, the drive power adjustment operation is always executed during the travel of the lean vehicle 1, and the control flow illustrated in Fig. 4 is executed during the travel of the lean vehicle 1.

The control flow illustrated in Fig. 4 is a control flow in which steps S104, S105, S107, S108 in the control flow illustrated in Fig. 3 described above are replaced with steps S204, S205, S207, S208.

When the control flow illustrated in Fig. 4 is initiated, in step S102, similar to the control flow illustrated in Fig. 3 described above, the execution section 22 determines whether the lean vehicle 1 travels straight.

If the lean vehicle 1 travels straight and it is determined YES in step S102, and if, in step S103, it is determined that the height direction acceleration is lower than the reference acceleration (step S103/NO), the processing proceeds to step S204, and, in step S204, the execution section 22 sets the target slip rate in the drive power adjustment operation to a reference value. On the other hand, if it is determined in step S103 that the height direction acceleration is higher than the reference acceleration (step S103/YES), the processing proceeds to step S205, and, in step S205, the execution section 22 sets the target slip rate in the drive power adjustment operation to a higher value than the reference value. Here, in the case where the height direction acceleration matches the reference acceleration, the processing may proceed to step S204 or may proceed to step S205. After step S204 or step S205, the processing returns to step S102.

As described above, for example, the execution section 22 reduces the drive power generated to the lean vehicle 1 in the case where the slip rate of the rear wheel 3 exceeds the target slip rate in the drive power adjustment operation. Accordingly, by increasing the target slip rate to be higher than the reference value, an execution condition of the drive power adjustment operation for reducing the drive power becomes a condition under which the drive power adjustment operation is less likely to be executed in comparison with the case where the target slip rate is equal to the reference value. In addition, by increasing the target slip rate to be higher than the reference value, for example, in a process of increasing the slip rate of the rear wheel 3, initiation timing of the drive power adjustment operation for reducing the drive power is delayed in comparison with the case where the target slip rate is equal to the reference value.

As described above, in the case where, in the state where the turning posture information is the information indicating that the lean vehicle 1 travels straight, the height direction acceleration index value is the value indicating that the high height direction acceleration is generated to the lean vehicle 1, the execution section 22 sets the execution condition of the drive power adjustment operation for reducing the drive power to the condition under which the drive power adjustment operation is less likely to be executed in comparison with the case where the height direction acceleration index value is the value indicating that the low height direction acceleration is generated to the lean vehicle 1. In this way, remaining of the control for reducing the drive power generated to the lean vehicle 1 can be suppressed when the tire load of the rear wheel 3 as the drive wheel returns to normal after the tire load of the rear wheel 3 as the drive wheel is reduced due to the loss thereof during the straight travel of the lean vehicle 1. Here, during the straight travel of the lean vehicle 1, the execution section 22 may change a degree of likelihood of the execution of the drive power adjustment operation in the stepwise manner or in the continuous manner according to the height direction acceleration generated to the lean vehicle 1.

As described above, in the case where the lean vehicle 1 travels straight on the heavily undulating road surface, the rider desires to maintain the acceleration property of the lean vehicle 1 at the certain level. As described above, in the case where the tire load of the rear wheel 3 returns to normal after the tire load of the rear wheel 3 is reduced due to the loss thereof during the straight travel of the lean vehicle 1, such a situation where the acceleration of the lean vehicle 1 is hindered due to the insufficient drive power generated to the lean vehicle 1 is suppressed by suppressing the remaining of the control for reducing the drive power generated to the lean vehicle 1. In this way, the situation where the drive power adjustment operation is not executed as intended by the rider is suppressed.

As described above, in the case where, in the state where the turning posture information is the information indicating that the lean vehicle 1 travels straight, the height direction acceleration index value is the value indicating that the high height direction acceleration is generated to the lean vehicle 1, the execution section 22 delays the initiation timing of the drive power adjustment operation for reducing the drive power in comparison with the case where the height direction acceleration index value is the value indicating that the low height direction acceleration is generated to the lean vehicle 1. In this way, remaining of the control for reducing the drive power generated to the lean vehicle 1 can be suppressed when the tire load of the rear wheel 3 as the drive wheel returns to normal after the tire load of the rear wheel 3 as the drive wheel is reduced due to the loss thereof during the straight travel of the lean vehicle 1. Here, during the straight travel of the lean vehicle 1, the execution section 22 may change the initiation timing of the drive power adjustment operation in the stepwise manner or in the continuous manner according to the height direction acceleration generated to the lean vehicle 1.

As described above, in the case where the lean vehicle 1 travels straight on the heavily undulating road surface, the rider desires to maintain the acceleration property of the lean vehicle 1 at the certain level. As described above, in the case where the tire load of the rear wheel 3 returns to normal after the tire load of the rear wheel 3 is reduced due to the loss thereof during the straight travel of the lean vehicle 1, such a situation where the acceleration of the lean vehicle 1 is hindered due to the insufficient drive power generated to the lean vehicle 1 is suppressed by suppressing the remaining of the control for reducing the drive power generated to the lean vehicle 1. In this way, the situation where the drive power adjustment operation is not executed as intended by the rider is suppressed.

If the lean vehicle 1 turns and it is determined NO in step S102, and if, in step S106, it is determined that the height direction acceleration is lower than the reference acceleration (step S106/NO), the processing proceeds to step S207, and, in step S207, the execution section 22 sets the target slip rate in the drive power adjustment operation to the reference value. On the other hand, if it is determined that the height direction acceleration is higher than the reference acceleration (step S106/YES), the processing proceeds to step S208, and, in step S208, the execution section 22 sets the target slip rate in the drive power adjustment operation to a lower value than the reference value. Here, in the case where the height direction acceleration matches the reference acceleration, the processing may proceed to step S207 or may proceed to step S208. After step S207 or step S208, the processing returns to step S102.

As described above, for example, the execution section 22 reduces the drive power generated to the lean vehicle 1 in the case where the slip rate of the rear wheel 3 exceeds the target slip rate in the drive power adjustment operation. Accordingly, by reducing the target slip rate to be lower than the reference value, the execution condition of the drive power adjustment operation for reducing the drive power becomes a condition under which the drive power adjustment operation is likely to be executed in comparison with the case where the target slip rate is equal to the reference value. In addition, by reducing the target slip rate to be lower than the reference value, for example, in the process of increasing the slip rate of the rear wheel 3, the initiation timing of the drive power adjustment operation for reducing the drive power is hastened in comparison with the case where the target slip rate is equal to the reference value.

As described above, in the case where, in the state where the turning posture information is the information indicating that the lean vehicle 1 turns, the height direction acceleration index value is the value indicating that the high height direction acceleration is generated to the lean vehicle 1, the execution section 22 sets the execution condition of the drive power adjustment operation for reducing the drive power to the condition under which the drive power adjustment operation is likely to be executed in comparison with the case where the height direction acceleration index value is the value indicating that the low height direction acceleration is generated to the lean vehicle 1. In this way, the adjustment for reducing the drive power generated to the lean vehicle 1 is likely to be executed when the tire load of the rear wheel 3 as the drive wheel is reduced due to the loss thereof during the turn of the lean vehicle 1. Here, during the turn of the lean vehicle 1, the execution section 22 may change the degree of the likelihood of the execution of the drive power adjustment operation in the stepwise manner or in the continuous manner according to the height direction acceleration generated to the lean vehicle 1.

As described above, in the case where the lean vehicle 1 turns on the heavily undulating road surface, the rider desires to optimize the wheel behavior or the body behavior of the lean vehicle 1. As described above, in the case where the tire load of the rear wheel 3 is reduced due to the loss thereof during the turn of the lean vehicle 1, such a situation where the suppression of the slip of the rear wheel 3 is insufficient is suppressed by promoting the adjustment for reducing the drive power generated to the lean vehicle 1. In this way, the situation where the drive power adjustment operation is not executed as intended by the rider is suppressed.

As described above, in the case where, in the state where the turning posture information is the information indicating that the lean vehicle 1 turns, the height direction acceleration index value is the value indicating that the high height direction acceleration is generated to the lean vehicle 1, the execution section 22 hastens the initiation timing of the drive power adjustment operation for reducing the drive power in comparison with the case where the height direction acceleration index value is the value indicating that the low height direction acceleration is generated to the lean vehicle 1. In this way, the initiation timing of the adjustment for reducing the drive power generated to the lean vehicle 1 is hastened when the tire load of the rear wheel 3 as the drive wheel is reduced due to the loss thereof during the turn of the lean vehicle 1. Here, during the turn of the lean vehicle 1, the execution section 22 may change the initiation timing of the drive power adjustment operation in the stepwise manner or in the continuous manner according to the height direction acceleration generated to the lean vehicle 1.

As described above, in the case where the lean vehicle 1 turns on the heavily undulating road surface, the rider desires to optimize the wheel behavior or the body behavior of the lean vehicle 1. As described above, in the case where the tire load of the rear wheel 3 is reduced due to the loss thereof during the turn of the lean vehicle 1, such a situation where the suppression of the slip of the rear wheel 3 is insufficient is suppressed by hastening the initiation timing of the adjustment for reducing the drive power generated to the lean vehicle 1. In this way, the situation where the drive power adjustment operation is not executed as intended by the rider is suppressed.

The above description has been made on the example in which, as the drive power adjustment operation, the drive power adjustment operation for reducing the drive power generated to the lean vehicle 1 according to the wheel behavior is executed. Here, the drive power adjustment operation only needs to be the operation for adjusting the drive power generated to the lean vehicle 1 according to the wheel behavior or the body behavior of the lean vehicle 1, and is not limited to the above example. For example, as the drive power adjustment operation, operation for increasing the drive power generated to the lean vehicle 1 according to the wheel behavior may be executed. Alternatively, for example, as the drive power adjustment operation, operation for reducing or increasing the drive power generated to the lean vehicle 1 according to the body behavior may be executed. The drive power adjustment operation according to the wheel behavior is executed to optimize the wheel behavior, for example. The drive power adjustment operation according to the body behavior is executed to optimize the body behavior, for example.

First, a description will be made on operation in an example in which, as the drive power adjustment operation, operation for reducing the drive power generated to the lean vehicle 1 according to the body behavior is executed.

In this example, similar to the examples that have been described with reference to Fig. 3 and Fig. 4, in the case where, in the state where the turning posture information is the information indicating that the lean vehicle 1 travels straight, the height direction acceleration index value is the value indicating that the high height direction acceleration is generated to the lean vehicle 1, the execution section 22 may increase the drive power generated to the lean vehicle 1 in the drive power adjustment operation, may set the execution condition of the drive power adjustment operation for reducing the drive power to the condition under which the drive power adjustment operation is less likely to be executed, or may delay the initiation timing of the drive power adjustment operation for reducing the drive power in comparison with the case where the height direction acceleration index value is the value indicating that the low height direction acceleration is generated to the lean vehicle 1. In this way, such a situation is suppressed where the acceleration of the lean vehicle 1 is hindered due to the insufficient drive power generated to the lean vehicle 1 during the straight travel of the lean vehicle 1.

In addition, in this example, similar to the examples that have been described with reference to Fig. 3 and Fig. 4, in the case where, in the state where the turning posture information is the information indicating that the lean vehicle 1 turns, the height direction acceleration index value is the value indicating that the high height direction acceleration is generated to the lean vehicle 1, the execution section 22 may reduce the drive power generated to the lean vehicle 1 in the drive power adjustment operation, may set the execution condition of the drive power adjustment operation for reducing the drive power to the condition under which the drive power adjustment operation is likely to be executed, or may hasten the initiation timing of the drive power adjustment operation for reducing the drive power in comparison with the case where the height direction acceleration index value is the value indicating that the low height direction acceleration is generated to the lean vehicle 1. In this way, such a situation is suppressed where the body behavior is not sufficiently optimized during the turn of the lean vehicle 1.

Next, a description will be made on operation in an example in which, as the drive power adjustment operation, operation for increasing the drive power generated to the lean vehicle 1 according to the wheel behavior or the body behavior is executed.

In this example, similar to the examples that have been described with reference to Fig. 3 and Fig. 4, in the case where, in the state where the turning posture information is the information indicating that the lean vehicle 1 travels straight, the height direction acceleration index value is the value indicating that the high height direction acceleration is generated to the lean vehicle 1, the execution section 22 may increase the drive power generated to the lean vehicle 1 in the drive power adjustment operation in comparison with the case where the height direction acceleration index value is the value indicating that the low height direction acceleration is generated to the lean vehicle 1. In this way, such a situation is suppressed where the acceleration of the lean vehicle 1 is hindered due to the insufficient drive power generated to the lean vehicle 1 during the straight travel of the lean vehicle 1.

Here, in the case where, in the state where the turning posture information is the information indicating that the lean vehicle 1 travels straight, the height direction acceleration index value is the value indicating that the high height direction acceleration is generated to the lean vehicle 1, the execution section 22 may set an execution condition of the drive power adjustment operation for increasing the drive power to the condition under which the drive power adjustment operation is likely to be executed, or may hasten initiation timing of the drive power adjustment operation for increasing the drive power in comparison with the case where the height direction acceleration index value is the value indicating that the low height direction acceleration is generated to the lean vehicle 1. In this way, such a situation is suppressed where the acceleration of the lean vehicle 1 is hindered due to the insufficient drive power generated to the lean vehicle 1 during the straight travel of the lean vehicle 1.

In addition, in this example, similar to the examples that have been described with reference to Fig. 3 and Fig. 4, in the case where, in the state where the turning posture information is the information indicating that the lean vehicle 1 turns, the height direction acceleration index value is the value indicating that the high height direction acceleration is generated to the lean vehicle 1, the execution section 22 may reduce the drive power generated to the lean vehicle 1 in the drive power adjustment operation in comparison with the case where the height direction acceleration index value is the value indicating that the low height direction acceleration is generated to the lean vehicle 1. In this way, such a situation is suppressed where the wheel behavior or the body behavior is not sufficiently optimized during the turn of the lean vehicle 1.

Here, in the case where, in the state where the turning posture information is the information indicating that the lean vehicle 1 turns, the height direction acceleration index value is the value indicating that the high height direction acceleration is generated to the lean vehicle 1, the execution section 22 may set the execution condition of the drive power adjustment operation for increasing the drive power to the condition under which the drive power adjustment operation is less likely to be executed, or may delay the initiation timing of the drive power adjustment operation for increasing the drive power in comparison with the case where the height direction acceleration index value is the value indicating that the low height direction acceleration is generated to the lean vehicle 1. In this way, such a situation is suppressed where the wheel behavior or the body behavior is not sufficiently optimized during the turn of the lean vehicle 1.

### <Effects of Controller>

A description will be made on effects of the controller 20 according to the embodiment of the present invention.

In the controller 20, the execution section 22 executes the drive power adjustment operation for adjusting the drive power generated to the lean vehicle 1 according to the wheel behavior or the body behavior of the lean vehicle 1. Here, the execution section 22 executes the drive power adjustment operation on the basis of the turning posture information of the lean vehicle 1 and the height direction acceleration index value that is the index value of the height direction acceleration generated to the lean vehicle 1. In this way, it is possible to adjust the drive power based on the tire load according to the turning situation of the lean vehicle 1. As a result, it is possible to appropriately adjust the drive power of the lean vehicle 1. Therefore, such a situation is suppressed where the drive power adjustment operation is not executed as intended by the rider.

Preferably, in the controller 20, the execution section 22 changes the drive power adjustment operation between the state where the turning posture information is information indicating that the lean vehicle 1 travels straight and the state where the turning posture information is information indicating that the lean vehicle 1 turns. In this way, it is possible to appropriately adjust the drive power based on the tire load according to the turning situation of the lean vehicle 1. As a result, it is possible to further appropriately adjust the drive power of the lean vehicle 1. Therefore, such a situation is appropriately suppressed where the drive power adjustment operation is not executed as intended by the rider.

Preferably, in the controller 20, in the case where, in the state where the turning posture information is the information indicating that the lean vehicle 1 travels straight, the height direction acceleration index value is the value indicating that the high height direction acceleration is generated to the lean vehicle 1, the execution section 22 increases the drive power generated to the lean vehicle 1 in the drive power adjustment operation in comparison with the case where the height direction acceleration index value is the value indicating that the low height direction acceleration is generated to the lean vehicle 1. In this way, it is possible to suppress the drive power generated to the lean vehicle 1 from being reduced when the tire load of the rear wheel 3 as the drive wheel is reduced due to the loss thereof during the straight travel of the lean vehicle 1. Therefore, such a situation is suppressed where the acceleration of the lean vehicle 1 is hindered due to the insufficient drive power generated to the lean vehicle 1 during the straight travel of the lean vehicle 1.

Preferably, in the controller 20, in the case where, in the state where the turning posture information is the information indicating that the lean vehicle 1 travels straight, the height direction acceleration index value is the value indicating that the high height direction acceleration is generated to the lean vehicle 1, the execution section 22 sets the execution condition of the drive power adjustment operation for reducing the drive power to the condition under which the drive power adjustment operation is less likely to be executed in comparison with the case where the height direction acceleration index value is the value indicating that the low height direction acceleration is generated to the lean vehicle 1. In this way, the remaining of the control for reducing the drive power generated to the lean vehicle 1 can be suppressed when the tire load of the rear wheel 3 as the drive wheel is reduced due to the loss thereof during the straight travel of the lean vehicle 1. Therefore, such a situation is suppressed where the acceleration of the lean vehicle 1 is hindered due to the insufficient drive power generated to the lean vehicle 1 during the straight travel of the lean vehicle 1.

Preferably, in the controller 20, in the case where, in the state where the turning posture information is the information indicating that the lean vehicle 1 travels straight, the height direction acceleration index value is the value indicating that the high height direction acceleration is generated to the lean vehicle 1, the execution section 22 sets the execution condition of the drive power adjustment operation for increasing the drive power to the condition under which the drive power adjustment operation is likely to be executed in comparison with the case where the height direction acceleration index value is the value indicating that the low height direction acceleration is generated to the lean vehicle 1. In this way, the adjustment for increasing the drive power generated to the lean vehicle 1 is likely to be executed when the tire load of the rear wheel 3 as the drive wheel is reduced due to the loss thereof during the straight travel of the lean vehicle 1. Therefore, such a situation is suppressed where the acceleration of the lean vehicle 1 is hindered due to the insufficient drive power generated to the lean vehicle 1 during the straight travel of the lean vehicle 1.

Preferably, in the controller 20, in the case where, in the state where the turning posture information is the information indicating that the lean vehicle 1 travels straight, the height direction acceleration index value is the value indicating that the high height direction acceleration is generated to the lean vehicle 1, the execution section 22 delays the initiation timing of the drive power adjustment operation for reducing the drive power in comparison with the case where the height direction acceleration index value is the value indicating that the low height direction acceleration is generated to the lean vehicle 1. In this way, the remaining of the control for reducing the drive power generated to the lean vehicle 1 can be suppressed when the tire load of the rear wheel 3 as the drive wheel is reduced due to the loss thereof during the straight travel of the lean vehicle 1. Therefore, such a situation is suppressed where the acceleration of the lean vehicle 1 is hindered due to the insufficient drive power generated to the lean vehicle 1 during the straight travel of the lean vehicle 1.

Preferably, in the controller 20, in the case where, in the state where the turning posture information is the information indicating that the lean vehicle 1 travels straight, the height direction acceleration index value is the value indicating that the high height direction acceleration is generated to the lean vehicle 1, the execution section 22 hastens the initiation timing of the drive power adjustment operation for increasing the drive power in comparison with the case where the height direction acceleration index value is the value indicating that the low height direction acceleration is generated to the lean vehicle 1. In this way, the initiation timing of the adjustment for increasing the drive power generated to the lean vehicle 1 is hastened when the tire load of the rear wheel 3 as the drive wheel is reduced due to the loss thereof during the straight travel of the lean vehicle 1. Therefore, such a situation is suppressed where the acceleration of the lean vehicle 1 is hindered due to the insufficient drive power generated to the lean vehicle 1 during the straight travel of the lean vehicle 1.

Preferably, in the controller 20, in the case where, in the state where the turning posture information is the information indicating that the lean vehicle 1 turns, the height direction acceleration index value is the value indicating that the high height direction acceleration is generated to the lean vehicle 1, the execution section 22 reduces the drive power generated to the lean vehicle 1 in the drive power adjustment operation in comparison with the case where the height direction acceleration index value is the value indicating that the low height direction acceleration is generated to the lean vehicle 1. In this way, the drive power generated to the lean vehicle 1 in the drive power adjustment operation is effectively reduced when the tire load of the rear wheel 3 as the drive wheel is reduced due to the loss thereof during the turn of the lean vehicle 1. Therefore, such a situation is suppressed where the wheel behavior or the body behavior is not sufficiently optimized during the turn of the lean vehicle 1.

Preferably, in the controller 20, in the case where, in the state where the turning posture information is the information indicating that the lean vehicle 1 turns, the height direction acceleration index value is the value indicating that the high height direction acceleration is generated to the lean vehicle 1, the execution section 22 sets the execution condition of the drive power adjustment operation for reducing the drive power to the condition under which the drive power adjustment operation is likely to be executed in comparison with the case where the height direction acceleration index value is the value indicating that the low height direction acceleration is generated to the lean vehicle 1. In this way, the adjustment for reducing the drive power generated to the lean vehicle 1 is likely to be executed when the tire load of the rear wheel 3 as the drive wheel is reduced due to the loss thereof during the turn of the lean vehicle 1. Therefore, such a situation is suppressed where the wheel behavior or the body behavior is not sufficiently optimized during the turn of the lean vehicle 1.

Preferably, in the controller 20, in the case where, in the state where the turning posture information is the information indicating that the lean vehicle 1 turns, the height direction acceleration index value is the value indicating that the high height direction acceleration is generated to the lean vehicle 1, the execution section 22 sets the execution condition of the drive power adjustment operation for increasing the drive power to the condition under which the drive power adjustment operation is less likely to be executed in comparison with the case where the height direction acceleration index value is the value indicating that the low height direction acceleration is generated to the lean vehicle 1. In this way, the adjustment for increasing the drive power generated to the lean vehicle 1 is less likely to be executed when the tire load of the rear wheel 3 as the drive wheel is reduced due to the loss thereof during the turn of the lean vehicle 1. Therefore, such a situation is suppressed where the wheel behavior or the body behavior is not sufficiently optimized during the turn of the lean vehicle 1.

Preferably, in the controller 20, in the case where, in the state where the turning posture information is the information indicating that the lean vehicle 1 turns, the height direction acceleration index value is the value indicating that the high height direction acceleration is generated to the lean vehicle 1, the execution section 22 hastens the initiation timing of the drive power adjustment operation for reducing the drive power in comparison with the case where the height direction acceleration index value is the value indicating that the low height direction acceleration is generated to the lean vehicle 1. In this way, the initiation timing of the adjustment for reducing the drive power generated to the lean vehicle 1 is hastened when the tire load of the rear wheel 3 as the drive wheel is reduced due to the loss thereof during the turn of the lean vehicle 1. Therefore, such a situation is suppressed where the wheel behavior or the body behavior is not sufficiently optimized during the turn of the lean vehicle 1.

Preferably, in the controller 20, in the case where, in the state where the turning posture information is the information indicating that the lean vehicle 1 turns, the height direction acceleration index value is the value indicating that the high height direction acceleration is generated to the lean vehicle 1, the execution section 22 delays the initiation timing of the drive power adjustment operation for increasing the drive power in comparison with the case where the height direction acceleration index value is the value indicating that the low height direction acceleration is generated to the lean vehicle 1. In this way, the initiation timing of the adjustment for increasing the drive power generated to the lean vehicle 1 is delayed when the tire load of the rear wheel 3 as the drive wheel is reduced due to the loss thereof during the turn of the lean vehicle 1. Therefore, such a situation is suppressed where the wheel behavior or the body behavior is not sufficiently optimized during the turn of the lean vehicle 1.

The present invention is not limited to the embodiment that has been described. For example, only a part of the embodiment may be implemented. Alternatively, the examples in the embodiment may be combined.

### Reference Signs List

- 1:: Lean vehicle
- 2:: Front wheel
- 3:: Rear wheel
- 11:: Engine
- 12:: Hydraulic pressure control unit
- 13:: Inertial measurement unit
- 14:: Front-wheel rotational frequency sensor
- 15:: Rear-wheel rotational frequency sensor
- 20:: Controller
- 21:: Acquisition section
- 22:: Execution section

## Claims

1. A controller (20) that controls behavior of a lean vehicle (1), the controller comprising:
an execution section (22) that executes drive power adjustment operation for adjusting drive power generated to the lean vehicle (1) according to wheel behavior or body behavior of the lean vehicle (1), wherein
the execution section (22) executes the drive power adjustment operation on the basis of turning posture information of the lean vehicle (1) and a height direction acceleration index value that is an index value of height direction acceleration generated to the lean vehicle (1).

2. The controller according to claim 1, wherein
the execution section (22) changes the drive power adjustment operation between a state where the turning posture information is information indicating that the lean vehicle (1) travels straight and a state where the turning posture information is information indicating that the lean vehicle (1) turns.

3. The controller according to claim 2, wherein
in the case where, in the state where the turning posture information is the information indicating that the lean vehicle (1) travels straight, the height direction acceleration index value is a value indicating that the high height direction acceleration is generated to the lean vehicle (1), the execution section (22) increases the drive power generated to the lean vehicle (1) in the drive power adjustment operation in comparison with the case where the height direction acceleration index value is a value indicating that the low height direction acceleration is generated to the lean vehicle (1).

4. The controller according to claim 2 or 3, wherein
in the case where, in the state where the turning posture information is the information indicating that the lean vehicle (1) travels straight, the height direction acceleration index value is a value indicating that the high height direction acceleration is generated to the lean vehicle (1), the execution section (22) sets an execution condition of the drive power adjustment operation for reducing the drive power to a condition under which the drive power adjustment operation is less likely to be executed in comparison with the case where the height direction acceleration index value is a value indicating that the low height direction acceleration is generated to the lean vehicle (1).

5. The controller according to any one of claims 2 to 4, wherein
in the case where, in the state where the turning posture information is the information indicating that the lean vehicle (1) travels straight, the height direction acceleration index value is a value indicating that the high height direction acceleration is generated to the lean vehicle (1), the execution section (22) sets an execution condition of the drive power adjustment operation for increasing the drive power to a condition under which the drive power adjustment operation is likely to be executed in comparison with the case where the height direction acceleration index value is a value indicating that the low height direction acceleration is generated to the lean vehicle (1).

6. The controller according to any one of claims 2 to 5, wherein
in the case where, in the state where the turning posture information is the information indicating that the lean vehicle (1) travels straight, the height direction acceleration index value is a value indicating that the high height direction acceleration is generated to the lean vehicle (1), the execution section (22) delays an initiation timing of the drive power adjustment operation for reducing the drive power in comparison with the case where the height direction acceleration index value is a value indicating that the low height direction acceleration is generated to the lean vehicle (1).

7. The controller according to any one of claims 2 to 6, wherein
in the case where, in the state where the turning posture information is the information indicating that the lean vehicle (1) travels straight, the height direction acceleration index value is a value indicating that the high height direction acceleration is generated to the lean vehicle (1), the execution section (22) hastens an initiation timing of the drive power adjustment operation for increasing the drive power in comparison with the case where the height direction acceleration index value is a value indicating that the low height direction acceleration is generated to the lean vehicle (1).

8. The controller according to any one of claims 2 to 7, wherein
in the case where, in the state where the turning posture information is the information indicating that the lean vehicle (1) turns, the height direction acceleration index value is a value indicating that the high height direction acceleration is generated to the lean vehicle (1), the execution section (22) reduces the drive power generated to the lean vehicle (1) in the drive power adjustment operation in comparison with the case where the height direction acceleration index value is a value indicating that the low height direction acceleration is generated to the lean vehicle (1).

9. The controller according to any one of claims 2 to 8, wherein
in the case where, in the state where the turning posture information is the information indicating that the lean vehicle (1) turns, the height direction acceleration index value is a value indicating that the high height direction acceleration is generated to the lean vehicle (1), the execution section (22) sets an execution condition of the drive power adjustment operation for reducing the drive power to a condition under which the drive power adjustment operation is likely to be executed in comparison with the case where the height direction acceleration index value is a value indicating that the low height direction acceleration is generated to the lean vehicle (1).

10. The controller according to any one of claims 2 to 9, wherein
in the case where, in the state where the turning posture information is the information indicating that the lean vehicle (1) turns, the height direction acceleration index value is a value indicating that the high height direction acceleration is generated to the lean vehicle (1), the execution section (22) sets an execution condition of the drive power adjustment operation for increasing the drive power to a condition under which the drive power adjustment operation is less likely to be executed in comparison with the case where the height direction acceleration index value is a value indicating that the low height direction acceleration is generated to the lean vehicle (1).

11. The controller according to any one of claims 2 to 10, wherein
in the case where, in the state where the turning posture information is the information indicating that the lean vehicle (1) turns, the height direction acceleration index value is a value indicating that the high height direction acceleration is generated to the lean vehicle (1), the execution section (22) hastens an initiation timing of the drive power adjustment operation for reducing the drive power in comparison with the case where the height direction acceleration index value is a value indicating that the low height direction acceleration is generated to the lean vehicle (1).

12. The controller according to any one of claims 2 to 11, wherein
in the case where, in the state where the turning posture information is the information indicating that the lean vehicle (1) turns, the height direction acceleration index value is a value indicating that the high height direction acceleration is generated to the lean vehicle (1), the execution section (22) delays an initiation timing of the drive power adjustment operation for increasing the drive power in comparison with the case where the height direction acceleration index value is a value indicating that the low height direction acceleration is generated to the lean vehicle (1).

13. A control method for behavior of a lean vehicle (1), wherein
an execution section (22) of a controller (20) executes drive power adjustment operation for adjusting drive power generated to the lean vehicle (1) according to wheel behavior or body behavior of the lean vehicle (1), and
the execution section (22) executes the drive power adjustment operation on the basis of turning posture information of the lean vehicle (1) and a height direction acceleration index value that is an index value of height direction acceleration generated to the lean vehicle (1).
